# EUROPEAN PATENT SPECIFICATION

(11) **EP 2 330 277 B1**
(45) Date of publication and mention of the grant of the patent: **18.09.2013**
(21) Application number: 10170043.3
(22) Date of filing: 19.07.2010
(51) Int. Cl.: F01M 13/04, F02M 25/06, F01M 13/00

(54) **Saddle type vehicle**
Sattelfahrzeug
Véhicule de type à enfourcher

(30) Priority: 02.12.2009 JP 2009274416
(43) Date of publication of application: 08.06.2011
(73) Proprietor: Yamaha Hatsudoki Kabushiki Kaisha, Shizuoka-ken 438-8501 (JP)
(72) Inventor: Nishimura, Hidehiro, Iwata-shi Shizuoka-ken 438-8501 (JP); Hayashi, Genichirou, Iwata-shi Shizuoka-ken 438-8501 (JP); Takahashi, Masashi, Iwata-shi Shizuoka-ken 438-8501 (JP); Takatani, Fumio, Iwata-shi Shizuoka-ken 438-8501 (JP); Sugiura, Keiji, Iwata-shi Shizuoka-ken 438-8501 (JP); Igarashi, Takeshi, Iwata-shi Shizuoka-ken 438-8501 (JP); Ujiie, Takayuki, Iwata-shi Shizuoka-ken 438-8501 (JP); Ootsu, Toyoharu, Iwata-shi Shizuoka-ken 438-8501 (JP)
(74) Representative: Zimmermann, Tankred Klaus

(56) References cited:
- DE-A1- 19 738 248
- JP-A- 59 015 617
- US-A- 2 829 629
- US-A- 4 958 613
- US-A1- 2008 210 206

## Description

### TECHNICAL FIELD

The present invention relates to a saddle type vehicle.

### BACKGROUND ART

In the saddle type vehicles, fuel is transferred to a combustion chamber of an engine through an intake path. Then, the transferred fuel may reach a crank case through clearance between a cylinder and a piston without being burned. In this case, the fuel is mixed with lubricant oil stored in the crank case. The lubricant oil increases its temperature in response to engine revolution. The unburned fuel, mixed with the lubricant oil, is accordingly changed into a gaseous state. The gaseous fuel (hereinafter referred to as "blow-by gas") is transferred to the intake path from the engine. The blow-by gas herein contains fine-particle lubricant oil. Therefore, the lubricant oil is desirably separated from the blow-by gas before the blow-by gas is returned to the intake path from the crank case.

To cope with this, Japan Laid-open Patent Application Publication No. JP-A-H05-086829 describes a motor cycle provided with an oil catch tank for separating oil from blow-by gas. The oil catch tank is connected to a crank case through a gas supply pipe. Further, the oil catch tank is connected to an air cleaner through a gas discharge pipe. The blow-by gas is transferred from the crank case to the oil catch tank through the gas supply pipe. The blow-by gas then rapidly expands within the oil catch tank. Accordingly, the oil is separated from the blow-by gas. After separation of the oil, the blow-by gas is transferred from the oil catch tank to the air cleaner through the gas discharge pipe, and is again supplied into the cylinder. On the other hand, the oil, separated from the blow-by gas within the oil catch tank, is retuned from the oil catch tank to an oil tank disposed beneath the engine through an oil return pipe. Then, the returned oil is again used for lubrication of various components of the engine.

### DISCLOSURE OF THE INVENTION

The present invention has an object to provide a saddle type vehicle configured to inhibit deviation of an air-fuel ratio of mixture gas to be supplied to an engine from a proper value and simultaneously inhibit enlargement of the vehicle.
This object is achieved by a saddle type vehicle according to claim 1.

A saddle type vehicle according to the present invention includes an engine, an intake path, an air cleaner, a blow-by gas path, a separation device, an air path, and an airflow control portion. The engine includes a crank case. The intake path is connected to the engine. The air cleaner is provided to the intake path. The blow-by gas path connects the crank case and the air cleaner. The separation device is provided to the blow-by gas path. The air path connects the air cleaner and the crank case. The airflow control portion is provided to the air path. The airflow control portion is configured to allow airflow from the air cleaner to the crank case and prevent airflow from the crank case to the air cleaner.

### ADVANTAGEOUS EFFECTS OF THE INVENTION

Alcohol-containing fuel has been recently used as the engine fuel for the saddle type vehicles. It was found out that when the alcohol-containing fuel is used for the saddle type vehicles, a phenomenon is caused that the alcohol enters the crank case through clearance between the cylinder and the piston without being burned, and is mixed with lubricant oil stored therein. When the lubricant oil herein increases its temperature, blow-by gas, containing the alcohol and the lubricant oil, enters the oil catch tank.

Now, alcohol has a narrow boiling-point range different from that of gasoline. For example, ethanol has a boiling-point range from roughly 78 degrees Celsius to roughly 80 degrees Celsius, whereas gasoline has a boiling-point range from roughly 30 degrees Celsius to roughly 200 degrees Celsius. Therefore, when oil increases its temperature and alcohol accordingly reaches its boiling point, the alcohol mixed with the oil suddenly evaporates and expands. Embodiments of the invention are advantageous in that it is avoided that a large quantity of gaseous alcohol is again transferred to the cylinder all at once through the intake path, thereby avoiding an air-fuel ratio of mixture gas to be supplied to the engine to deviate from a proper value. To inhibit deviation of the air-fuel ratio from the proper value, a part of massive gaseous alcohol, together with the lubricant oil, is separated from the blow-by gas within the oil catch tank by changing the gaseous alcohol into a liquid state. In accordance with embodiments of the invention this is achieved by providing an oil catch tank having a sufficiently large capacity without enlarging the vehicle.

According to the saddle type vehicle of the present invention, air is transferred from the air cleaner to the crank case through the air path. The crank case is thereby ventilated and quantity of alcohol contained in unit volume of blow-by gas can be reduced. Therefore, it is possible to inhibit deviation of an air-fuel ratio of mixture gas to be supplied to the engine from a proper value. Further, reduction in density of alcohol contained in blow-by gas makes it possible to return as much alcohol as possible to the engine. Accordingly, quantity of alcohol to be changed into a liquid state within the separation device is reduced. This can inhibit increase in volume of the separation device. Consequently, the saddle type vehicle of the present invention can inhibit deviation of an air-fuel ratio from a proper value and simultaneously inhibit enlargement of the vehicle.

### BRIEF DESCRIPTION OF THE DRAWINGS

FIG. 1 is a side view of a motorcycle according to an embodiment of the present invention.
FIG.2 is a side view of internal structure of the motorcycle.
FIG.3 is a top view of the internal structure of the motorcycle.
FIG.4 is a side view of structure of an engine and its surrounding.
FIG.5 is a side view of an intake path.
FIG.6 is a front view of an air cleaner and a catch tank.
FIG.7 is a top view of a part of the air cleaner.
FIG.8 is a cross-sectional side view of the catch tank.
FIG.9 is a schematic diagram illustrating connection among the engine, the air cleaner, and the catch tank.
FIG.10 is a side view of structure of a catch tank and its periphery according to one of other embodiments.
FIG.11 is a side view of structure of a catch tank and its periphery according to one of other embodiments.
FIG.12 is a side view of structure of a catch tank and its periphery according to one of other embodiments.
FIG. 13 is a front view of an air cleaner and a catch tank according to one of other embodiments.
FIG.14 is a cross sectional view of the air cleaner, sectioned along line XIV-XIV in FIG.13.
FIG.15 is a side view of a motorcycle according to another embodiment.

### BEST MODE FOR CARRYING OUT THE INVENTION

### [Entire Structure]

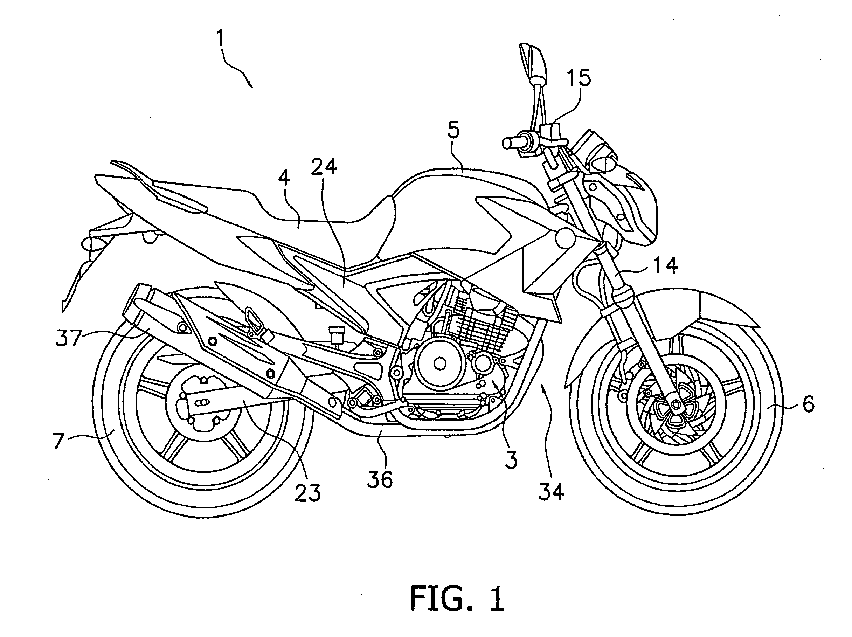

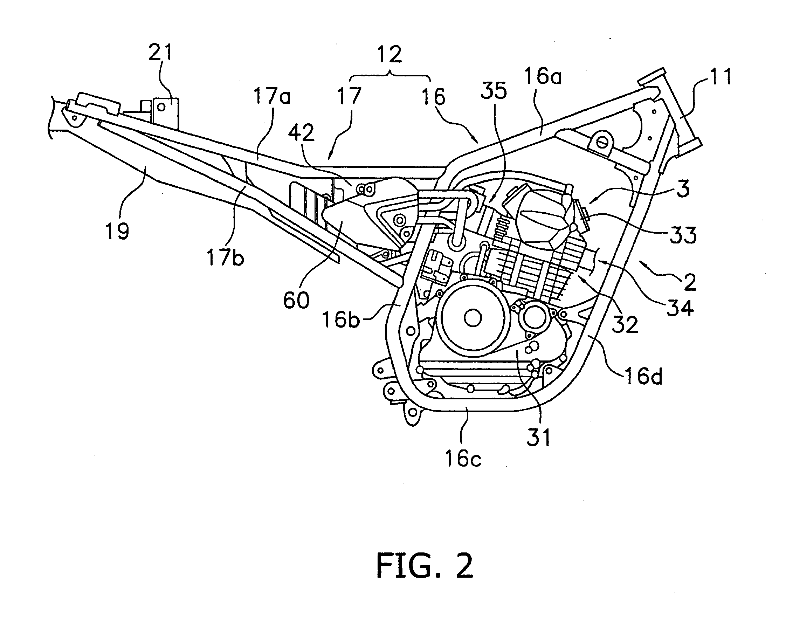

FIG.1 illustrates a motorcycle 1 according to an embodiment of the present invention. The motorcycle 1 includes a vehicle body frame 2 (see FIG.2), an engine 3, a seat 4, a fuel tank 5, a front wheel 6, and a rear wheel 7. It should be noted terms "right" and "left" hereinafter refer to a right direction and a left direction, seen from a rider riding on the motorcycle 1.

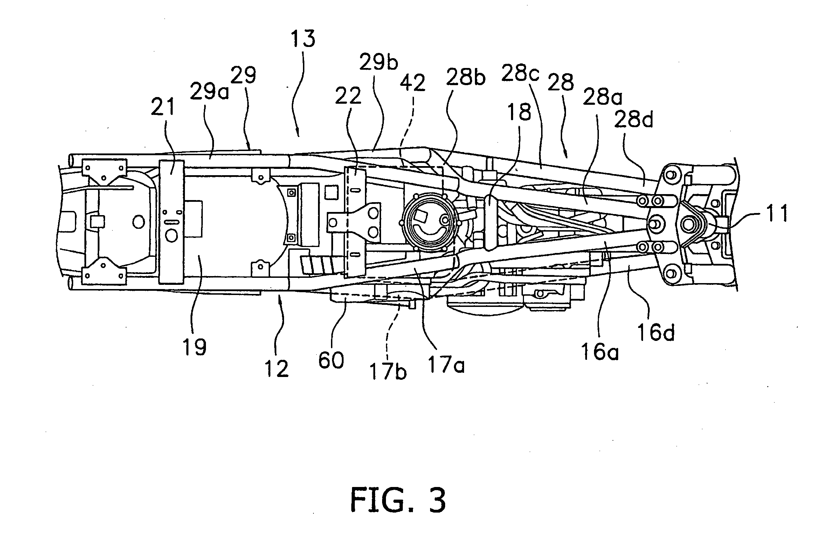

As illustrated in FIGS. 2 and 3, the vehicle body frame 2 includes a head pipe 11, a right side frame 12, a left side frame 13, and a coupling frame 18. As illustrated in FIG.1, the head pipe 11 supports a front fork 14. A handle 15 is fixed to the upper end of the front fork 14. The front wheel 6 is supported by the lower end of the front fork 14 in a rotatable state.

The right and left side frames 12, 13 compose a frame portion extended from the head pipe 11 to the rearward. As illustrated in FIGS.2 and 3, the right and left side frames 12, 13 are respectively extended from the head pipe 11 to the rearward, and are separated from each other in a vehicle-width direction (hereinafter referred to as a transverse direction). The right side frame 12 includes a front frame portion 16 and a rear frame portion 17.

The front frame portion 16 is bent at plural positions. The front frame portion 16 includes a first portion 16a, a second portion 16b, a third portion 16c, and a fourth portion 16d. The first portion 16a is linked to the head pipe 11. The second portion 16b is extended from the rear end of the first portion 16a to the downward. The third portion 16c is extended from the lower end of the second portion 16b to the forward. The fourth portion 16d is forwardly extended from the front end of the third portion 16c in an obliquely upward direction, and is linked to the head pipe 11. In the present embodiment, the phrase "(a component) is linked to (another component)" means not only a condition that two individual members are coupled to each other by means of a fixation method such as welding but also a condition that two portions included in single member continue to each other.

The rear frame portion 17 is extended from the front frame portion 16 to the rearward, and is linked to the front frame portion 16. The rear frame portion 17 includes an upper frame portion 17a and a lower frame portion 17b. The front end of the upper frame portion 17a is linked to a bent portion between the first portion 16a and the second portion 16b in the front frame portion 16. The lower frame portion 17b is disposed beneath the upper frame portion 17a. The front end of the lower frame portion 17b is linked to the second portion 16b of the front frame portion 16. On the other hand, the rear end of the lower frame portion 17b is linked to the rear end of the upper frame portion 17a. Further, the upper and lower frame portions 17a, 17b get closer to the rearward. The left side frame 13 has a same shape as the right side frame 12. In short, the left side frame 13 includes a front frame portion 28 and a rear frame portion 29 as illustrated in FIG.3. The front frame portion 28 includes a first portion 28a, a second portion 28b, a third portion 28c, and a fourth portion 28d. The rear frame portion 29 includes an upper frame portion 29a and a lower frame portion 29b. Further, the right and left side frames 12, 13 are coupled by the coupling frame 18 extending in the transverse direction. Yet further, support members 21, 22 are bridged over the right and left side frames 12, 13 for supporting the seat 4 and the fuel tank 5. It should be noted that a rear fender 19 is attached to the lower portion of the rear frame portion 17 for covering the rear wheel 7 from the above.

As illustrated in FIG.1, the seat 4 and the fuel tank 5 are attached to the upper portion of the vehicle body frame 2. The fuel tank 5 is disposed in front of the seat 4. A swing arm 23 is coupled to the rear end of the front frame portion 16 while being allowed to pivot up and down. The rear wheel 7 is supported by the rear end of the swing arm 23 in a rotatable state. Further, a pair of side covers 24 is attached to a right and left lateral sides of the vehicle body frame 2. In a side view, the side cover 24 is disposed for laterally covering a space between the upper frame portion 17a and the lower frame portion 17b.

The engine 3 is a four-stroke engine configured to transmit driving force to the rear wheel 7 through a chain (not illustrated in the figure). The engine 3 is disposed beneath the fuel tank 5, and is supported by the front frame portion 16. As illustrated in FIG.2, the engine 3 includes a crank case 31 and a cylinder portion 32. The crank case 31 accommodates a crank shaft (not illustrated in the figure) in its inside. The cylinder portion 32 is attached to the top portion of the crank case 31. The cylinder portion 32 accommodates a piston (not illustrated in the figure) in its inside. The piston is coupled to the crank shaft. The cylinder portion 32 includes a cylinder head 33.

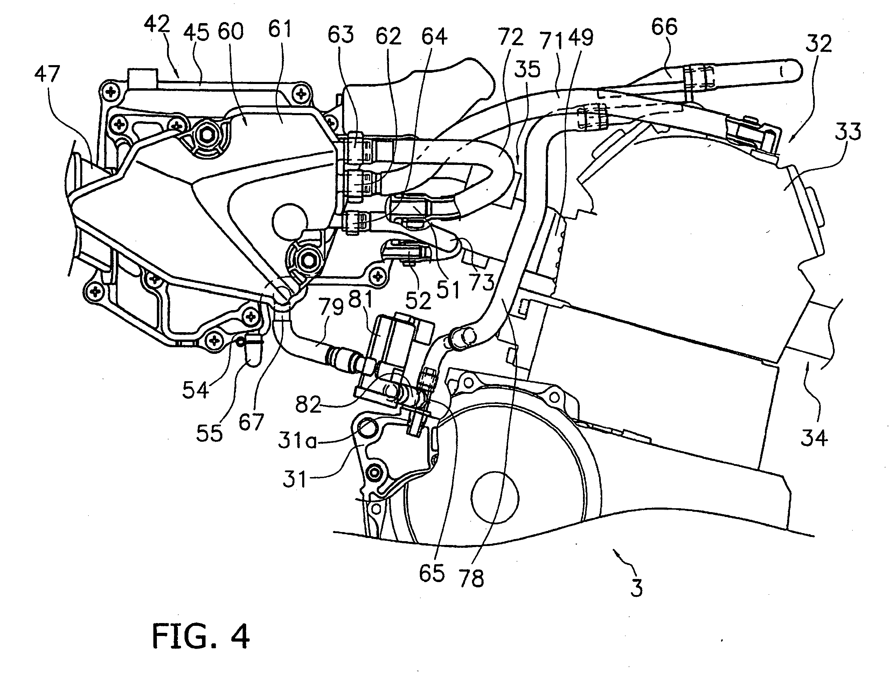

FIG.4 illustrates an enlarged view of structure of the engine 3 and its surrounding. As illustrated in FIG.4, an exhaust path 34 and an intake path 35 are connected to the cylinder head 33. As illustrated in FIG.1, an exhaust pipe 36 and a muffler 37 are provided to the exhaust path 34. The exhaust pipe 36 is connected to the front surface of the cylinder head 33. The exhaust pipe 36 is backwardly bent in front of the engine 3. Accordingly, the exhaust pipe 36 is disposed along the outer periphery of the engine 3. The muffler 37 is connected to the rear portion of the exhaust pipe 36, and is disposed lateral to the rear wheel 7.

As illustrated in FIG.4, the intake path 35 is disposed to the rearward of the cylinder head 33. Further, a catch tank 60 is disposed lateral to the intake path 35. The catch tank 60 is a separation device configured to separate alcohol changed into a gaseous state from blow-by gas.

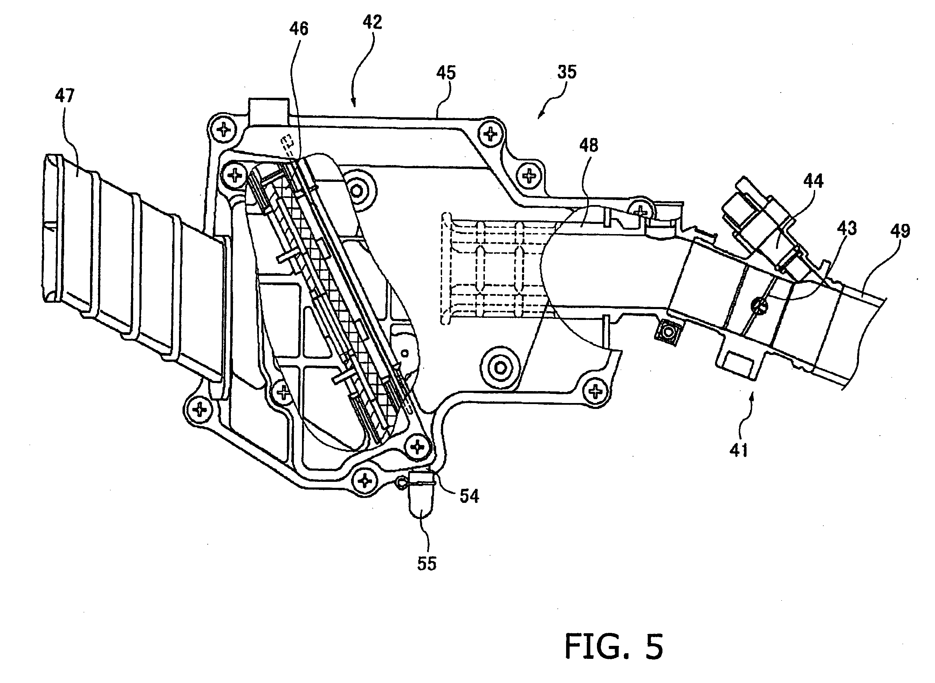

FIG.5 illustrates a side view of the intake path 35. A first intake pipe 49, a throttle body 41, a second intake pipe 48, and an air cleaner 42 are provide to the intake path 35. The first intake pipe 49 connects the engine 3 and the throttle body 41. The throttle body 41 is connected to the cylinder head 33 of the engine 3. The throttle body 41 accommodates a throttle valve 43 in its inside. The intake amount of the engine 3 is regulated in accordance with change of opening degree of the throttle valve 43. Further, an injector 44 is disposed in a more downstream position than the throttle valve 43 in an airflow direction. The injector 44 is connected to the fuel tank 5 through a fuel supply hosepipe (not illustrated in the figure). The injector 44 is configured to inject fuel. In the intake path 35, the injector 44 is disposed between the throttle valve 43 and the engine 3. The second intake pipe 48 connects the throttle body 41 and the air cleaner 42.

### [Structures of Air Cleaner 42 and Catch Tank 60]

Structures of the air cleaner 42 and the catch tank 60 will be hereinafter explained in detail.

In the intake path 35, the air cleaner 42 is disposed in a more upstream position than the throttle body 41 in the airflow direction. As illustrated in FIG. 4, the air cleaner 42 is aligned with the engine 3 in a back-and-forth direction (hereinafter referred to as a longitudinal direction), and is disposed to the rearward of the cylinder head 33. In a plan view, the air cleaner 42 is disposed between the right lower frame portion 17b and the left lower frame portion 29b (see FIG.3).

As illustrated in FIG. 5, the air cleaner 42 includes an air inlet 47, a filter 46, and a casing 45. The air inlet 47 is provided to the rear portion (i.e., left side in FIG.5) of the casing 45. External air inhaled into the casing 45 passes through the air inlet 47. The filter 46 is disposed in the inside of the casing 45. The filter 46 is configured to purify the inhaled air passing through it. The casing 45 is a member having a hollow space in its inside. The second intake pipe 48, extended from the throttle body 41, is attached to the front portion (i.e., right side in FIG.5) of the casing 45.

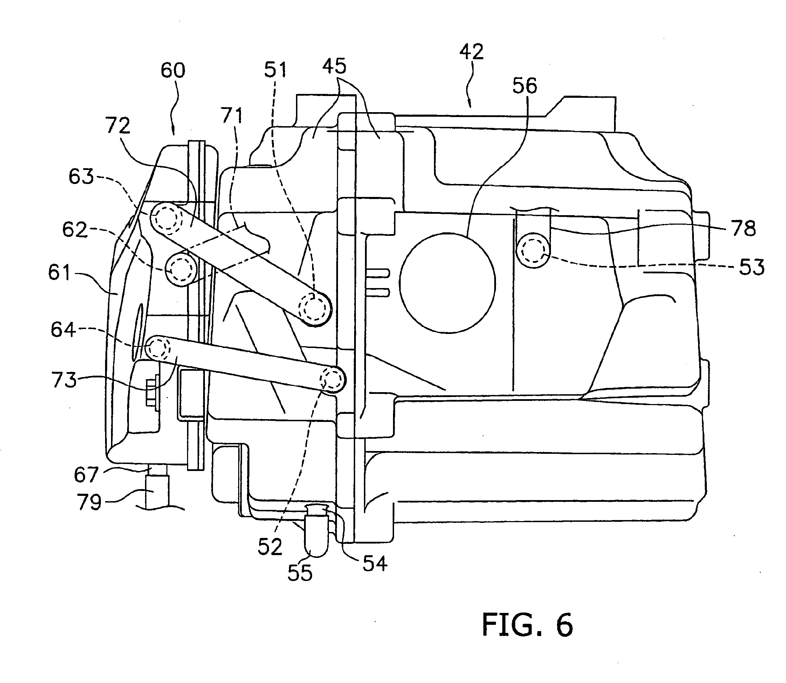

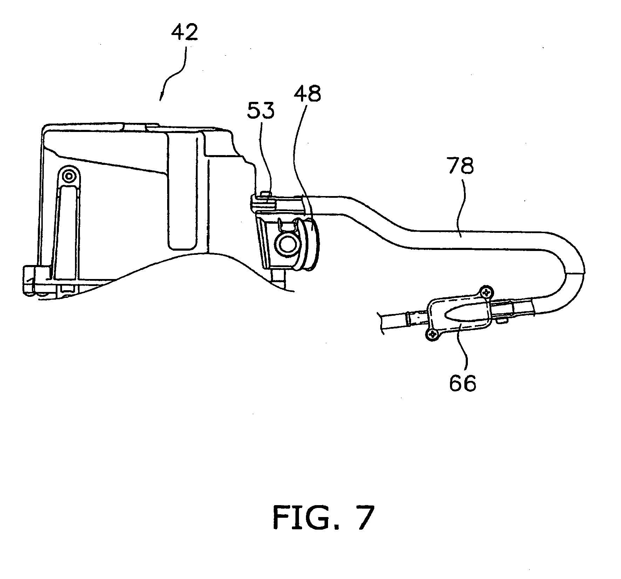

As illustrated in FIGS.4, 6, and 7, the casing 45 is further provided with a first attachment port 51, a second attachment port 52, a third attachment port 53, and an outlet 54. FIG.6 is herein a front view of the air cleaner 42 and the catch tank 60. FIG.7 is a top view of a portion of the air cleaner 42. The first attachment port 51, the second attachment port 52, the third attachment port 53, and the outlet 54 communicate with a portion of the inner space of the casing 45. The portion of the inner space is herein disposed in a more downstream position than the filter 46 in the airflow direction. The first attachment port 51, the second attachment port 52, and the third attachment port 53 are provided to the front portion of the casing 45.

A second hosepipe 72 described below is connected to the first attachment port 51. On the other hand, a third hosepipe 73 described below is connected to the second attachment port 52. The second attachment port 52 is positioned lower than the first attachment port 51. The third attachment port 53 is positioned higher than the first attachment port 51. The third attachment port 53 is disposed away from the first attachment port 51 in the transverse direction. Further, an opening 56 is provided between the first attachment port 51 and the third attachment port 53. The foregoing the second intake pipe 48 is inserted into the opening 56. One end of a fourth hosepipe 78 is connected to the third attachment port 53. The other end of the fourth hosepipe 78 is connected to an inflow port 31a of the crank case 31 through a connection member 65 as illustrated in FIG.4. Air in the air cleaner 42 is transferred into the crank case 31 through the fourth hosepipe 78. Therefore, the fourth hosepipe 78 composes an air path connecting the air cleaner 42 and the crank case 31. The fourth hosepipe 78 is further provided with an airflow control valve 66. The airflow control valve 66 is an one-way valve. The airflow control valve 66 is configured to allow airflow from the air cleaner 42 to the crank case 31 and prevent airflow from the crank case 31 to the air cleaner 42.

The outlet 54 is provided to the bottom portion of the casing 45. The outlet 54 is protruded from the bottom portion of the casing 45 to the downward. A stopper 55 is detachably attached to the outlet 54. The outlet 54 is sealed by the stopper 55.

As illustrated in FIGS.4 and 6, the catch tank 60 is disposed lateral to the air cleaner 42. In other words, the catch tank 60 is aligned with the air cleaner 42 in the transverse direction, and is opposed to the lateral surface of the air cleaner 42. The catch tank 60 is attached to the lateral surface of the air cleaner 42. Further, the foregoing side cover 24 (see FIG.1) is disposed to the transversely outward of the catch tank 60. The catch tank 60 is disposed between the side cover 24 and the air cleaner 42 in the transverse direction. As illustrated in FIG.2, the catch tank 60 is further disposed to the rearward of the front frame portion 16. The catch tank 60 is disposed between the upper and lower frame portions 17a, 17b of the rear frame portion 17 in an up-and-down direction (hereinafter referred to as a vertical direction). Therefore, the catch tank 60 is disposed to the rearward of the cylinder portion 32 of the engine 3. Further, the catch tank 60 is overlapped with the upper and lower frame portions 17a, 17b in the vertical direction.

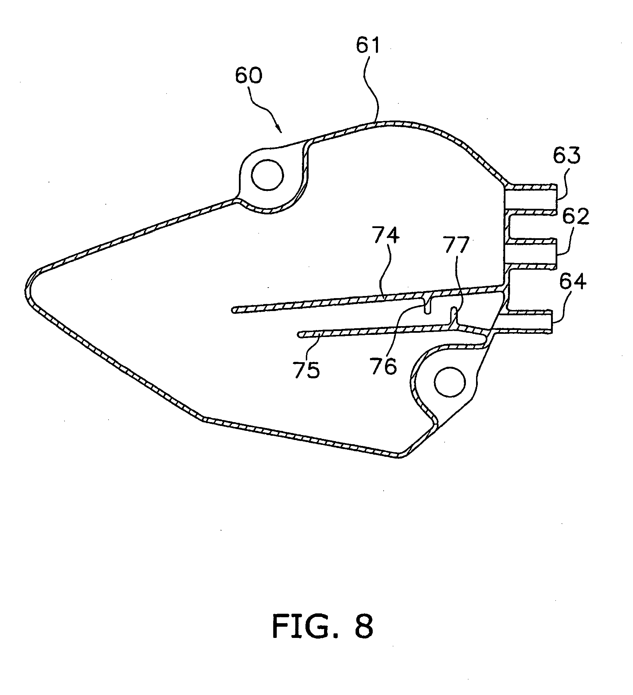

The catch tank 60 includes a tank body 61, a first connection port 62, a second connection port 63, a third connection port 64, and a fourth connection port 67. As illustrated in FIG.8, the tank body 61 has a hollow space in its inside, and is elongated further in the vertical direction than in the transverse direction (horizontal direction in FIG.8). Further, the tank body 61 is elongated further in the longitudinal direction than in the transverse direction. A rear portion of the tank body 61 has a shape convexly protruded to the rearward.

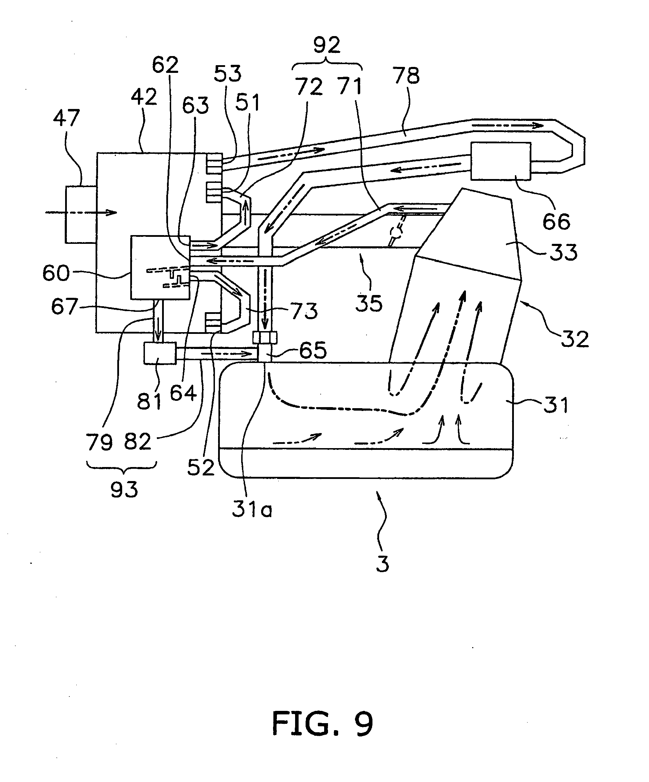

The first, second, and third connection ports 62, 63, 64 are protruded from the front portion of the tank body 61 to the forward. One end of a first hosepipe 71 is connected to the first connection port 62. The other end of the first hosepipe 71 is connected to the cylinder head 33 of the engine 3. The first hosepipe 71 communicates with the inside of the crank case 31 through a cam-chain chamber (not illustrated in the figure) within the cylinder portion 32. The first hosepipe 71 connects the inside of the crank case 31 of the engine 3 and the inside of the tank body 61. The second connection port 63 is positioned higher than the first connection port 62. One end of the second hosepipe 72 is connected to the second connection port 63. The other end of the second hosepipe 72 is connected to the first attachment port 51 of the air cleaner 42. The second connection port 63 is positioned higher than the first attachment port 51. Blow-by gas, produced within the crank case 31, is transferred to the air cleaner 42 through the first hosepipe 71, the catch tank 60, and the second hosepipe 72. Therefore, the first hosepipe 71 and the second hosepipe 72 compose a blow-by gas path 92 (see FIG.9) connecting the crank case 31 and the air cleaner 42. The catch tank 60 is provided in the blow-by gas path 92.

The third connection port 64 is positioned lower than the first connection port 62. One end of the third hosepipe 73 is connected to the third connection port 64. The other end of the third hosepipe 73 is connected to the second attachment port 52 of the air cleaner 42. Further, the third connection port 64 is positioned higher than the second attachment port 52.

The fourth connection port 67 is protruded from the bottom portion of the tank body 61 to the downward. One end of a fifth hosepipe 79 is connected to the fourth connection port 67. The other end of the fifth hosepipe 79 is connected to an open/close valve 81. The open/close valve 81 is connected to the connection member 65 through a sixth hosepipe 82. Therefore, the fifth and sixth hosepipes 79, 82 compose a first flow path 93 (see FIG.9) for returning liquid within the catch tank 60 to the crank case 31. The open/close valve 81 is provided to the first flow path 93. The open/close valve 81 is an electromagnetic valve to be controlled by a command signal from an engine control unit (not illustrated in the figure). The open/close valve 81 is configured to open/close the first flow path 93 based on the command signal.

As illustrated in FIG.8, the tank body 61 is provided with a first divider portion 74 and a second divider portion 75 in its interior. The first divider portion 74 is extended to the rearward (i.e., left side in FIG. 8) from a portion vertically positioned between the first connection port 62 and the third connection port 64 on the inner surface of the tank body 61. The first divider portion 74 is downwardly slanted to the rearward. Further, a first protrusion 76 is provided to the bottom surface of the first divider portion 74. The first protrusion 76 is protruded to the downward from the bottom surface of the first divider portion 74. The second divider portion 75 is extended to the rearward from a portion positioned lower than the third connection port 64 on the inner surface of the tank body 61. Further, the second divider portion 75 is positioned lower than the first divider portion 74. The second divider portion 75 is shorter than the first divider portion 74 in the longitudinal direction. The rear end of the second divider portion 75 is positioned to the forward of the rear end of the first divider portion 74. The second divider portion 75 is downwardly slanted to the rearward. The slant angle of the second divider portion 75 is smaller than that of the first divider portion 74. Therefore, distance between the first and second divider portions 74, 75 gets smaller to the rearward. Further, a second protrusion 77 is provided to the top surface of the second divider portion 75. The second protrusion 77 is protruded to the upward from the top surface of the second divider portion 75. The second protrusion 77 is positioned to the forward of the first protrusion 76. Therefore, the second protrusion 77 is positioned closer to the third connection port 64 than the first protrusion 76 is.

### [Blow-by Gas Processing]

Next, blow-by gas processing, executed when alcohol-containing fuel is used in the motorcycle 1, will be hereinafter explained with reference to FIG.9. FIG.9 9 is a schematic diagram illustrating connection among the engine 3, the air cleaner 42, and the catch tank 60. It should be noted that alcohol has a feature that it is easily changed into a gaseous state because of its low boiling point different from a boiling point of lubricant oil. For example, ethanol has a boiling-point range from roughly 78 degrees Celsius to roughly 80 degrees Celsius. Further, alcohol has a feature that it is suddenly changed into a gaseous state once reaching its boiling point because of its narrow boiling-point range different from a boiling-point range of gasoline.

First, when fuel, containing alcohol and gasoline, reaches the inside of the crank case 31 from the combustion chamber of the engine 3 through clearance between the piston (not illustrated in the figure) and the cylinder portion 32, alcohol and gasoline contained in the fuel are mixed with lubricant oil stored within the crank case 31. Next, when the lubricant oil increases its temperature in response to operation of the engine 3 and alcohol accordingly reaches its boiling point, alcohol mixed with the lubricant oil is suddenly evaporated. Blow-by gas, containing gaseous alcohol, gasoline, and fine-particle oil, is transferred from the inside of the crank case 31 to the inside of the catch tank 60 through the cam-chain chamber within the cylinder portion 32, the first hosepipe 71, and the first connection port 62. Alcohol and gasoline contained in the blow-by gas are partially changed into a liquid state within the catch tank 60. They are thus separated together with the lubricant oil from the blow-by gas, and are accumulated within the catch tank 60. The rest of alcohol is transferred to the air cleaner 42 through the second connection port 63, the second hosepipe 72, and the first attachment port 51, while being kept contained in the blow-by gas together with gasoline. In this case, the blow-by gas is transferred to a clean side within the air cleaner 42, i.e., a more downstream position than the filter 46 in the airflow direction. The blow-by gas then joins the mixture gas and is supplied to the engine 3 through the intake path 35.

According to the motorcycle 1 of the present embodiment, alcohol, changed into a gaseous state within the crank case 31, is again returned to the combustion chamber of the engine 3 after passing through the catch tank 60 with large capacity. The gaseous alcohol is partially changed into a liquid state within the catch tank 60 and is separated from the blow-by gas. Therefore, it is possible to inhibit massive blow-by gas of high alcohol content from being returned to the combustion chamber of the engine 3. Consequently, it is possible to inhibit large deviation of an air-fuel ratio of mixture gas to be supplied to the engine 3 from a target value.

On the other hand, the air cleaner 42 is configured to inhale the external air to its inside through the air inlet 47. The inhaled air is transferred to the crank case 31 through the third attachment port 53, the fourth hosepipe 78, and the connection member 65. Accordingly, the inside of the crank case 31 is ventilated. It should be noted that the airflow control valve 66, provide to the fourth hosepipe 78, prevents reverse flow of air towards the air cleaner 42.

In response to opening of the open/close valve 81, liquid alcohol, liquid gasoline, and lubricant oil, separated from blow-by gas within the catch tank 60, are transferred to the crank case 31 through the fourth connection port 67, the fifth hosepipe 79, the sixth hosepipe 82, and the connection member 65. The term "liquid", thus simply described, hereinafter refers to mixture of liquid alcohol, liquid gasoline, and lubricant oil. Liquid alcohol and liquid gasoline are changed into a gaseous state in the crank case 31, and are again processed as blow-by gas. It should be noted that the open/close valve 81 is closed during activation of the engine 3 but is opened during deactivation of the engine 3.

During the open/close valve 81 is closed, liquid is accumulated within the catch tank 60. When quantity of liquid within the catch tank 60 is equal to or greater than predetermined quantity, the liquid is transferred to the air cleaner 42 through the third connection port 64, the third hosepipe 73, and the second attachment port 52. Therefore, liquid is prevented from being excessively accumulated in the catch tank 60. Liquid, accumulated within the air cleaner 42, can be discharged to the outside by removing the stopper 55 from the outlet 54.

When liquid is accumulated in the lower portion of the catch tank 60 as described above, the surface of the liquid may greatly wave in response to acceleration or deceleration of the motorcycle 1. According to the motorcycle 1, however, liquid is prevented from easily flowing into the third connection port 64 by the second divider portion 75, the first protrusion 76, and the second protrusion 77 even if the surface of the liquid greatly waves. It is thereby possible to prevent a large quantity of liquid from flowing into the air cleaner 42 all at once through the third connection port 64. Further, according to the motorcycle 1, liquid is prevented from easily flowing into the first connection port 62 by the first divider portion 74 even if the surface of the liquid greatly waves. Therefore, it is possible to prevent reverse flow of liquid from the catch tank 60 to the engine 3.

### [Features]

(1) According to the motorcycle 1 of the present embodiment, external air is transferred from the air cleaner 42 to the crank case 31 through the fourth hosepipe 78 and the connection member 65. Accordingly, the inside of the crank case 31 is ventilated. Therefore, quantity of alcohol and gasoline contained in unit volume of blow-by gas is reduced. Consequently, it is possible to inhibit deviation of an air-fuel ratio of mixture gas to be supplied to the engine 3 from a proper value.

Further, reduction in density of alcohol and gasoline in blow-by gas makes it possible to return alcohol and gasoline to the engine 3 as much as possible. It is thereby possible to increase quantity of alcohol and gasoline in blow-by gas to be burned in the engine 3 while an air-fuel ratio is inhibited from being deviated from a proper value. Therefore, it is possible to reduce quantity of alcohol and gasoline to be changed into a liquid state within the catch tank 60. Consequently, the catch tank 60 can be downsized, and this can inhibit enlargement of the vehicle.

As described above, according to the motorcycle 1 of the present embodiment, it is possible to inhibit deviation of an air-fuel ratio from a proper value and simultaneously inhibit enlargement of the vehicle.
(2) According to the motorcycle 1 of the present embodiment, liquid within the catch tank 60 is returned to the crank case 31 through the fourth connection port 67, the fifth hosepipe 79, the open/close valve 81, the sixth hosepipe 82, and the connection member 65. Accordingly, liquid alcohol and liquid gasoline are changed into a gaseous state within the crank case 31, and are again transferred to the catch tank 60 as blow-by gas. Then, alcohol and gasoline contained in the blow-by gas are partially changed into a liquid state within the catch tank 60. The rest of alcohol and gasoline are transferred to the air cleaner 42 while being kept as a gaseous state, and are then burned with mixture gas in the engine 3. Repetition of the processing makes it possible to reliably change alcohol and gasoline, accumulated within the catch tank 60, into a gaseous state and gradually burn alcohol and gasoline contained in the blow-by gas. Therefore, a user is not required to perform a maintenance work for discharging liquid from the catch tank 60. Alternatively, frequency of maintenance works can be reduced. Further, gradual burning of alcohol and gasoline contained in blow-by gas makes it possible to inhibit large deviation of an air-fuel ratio of mixture gas to be supplied to the engine 3 from a target value. Yet further, it is possible to prevent accumulation of large quantity of liquid within the catch tank 60. Therefore, the catch tank 60 can be downsized, and this can inhibits enlargement of the vehicle.

(3) According to the motorcycle 1 of the present embodiment, the open/close valve 81 can control supply of liquid from the catch tank 60 to the crank case 31. The open/close valve 81 is opened at the time of deactivation of the engine 3. Therefore, it is possible to return liquid little by little from the catch tank 60 to the crank case 31 every time the engine 3 is deactivated.

### [Other Embodiments]

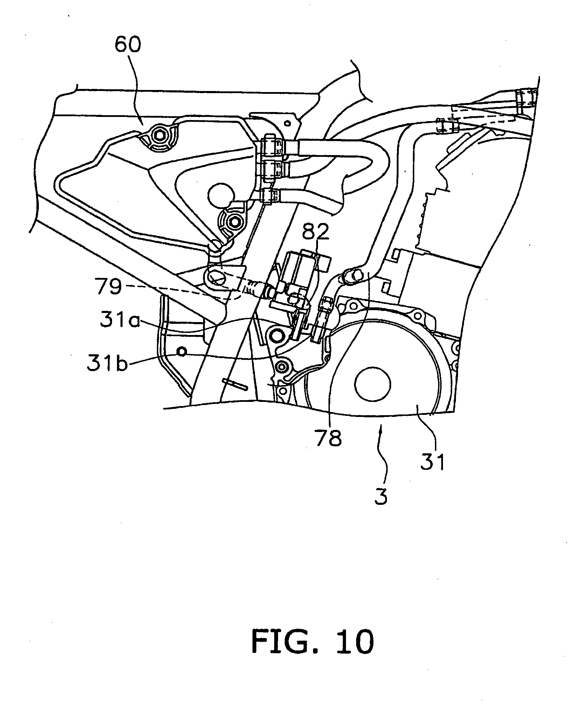

One of embodiments of the present invention has been described above. However, the present invention is not limited to the foregoing embodiment. Various changes can be made for the foregoing embodiment without departing from the scope of the present invention.
(a) In the foregoing embodiment, the fourth hosepipe 78 and the sixth hosepipe 82 are connected to the mutual inflow port 31a through the connection member 65. However, the fourth hosepipe 78 and the sixth hosepipe 82 may be connected to different inflow ports. For example, the crank case 31 may be provided with two inflow ports 31a, 31b as illustrated in FIG.10. In this case, the fourth hosepipe 78 is connected to the inflow port 31b, and the sixth hosepipe 82 is connected to the inflow port 31a.

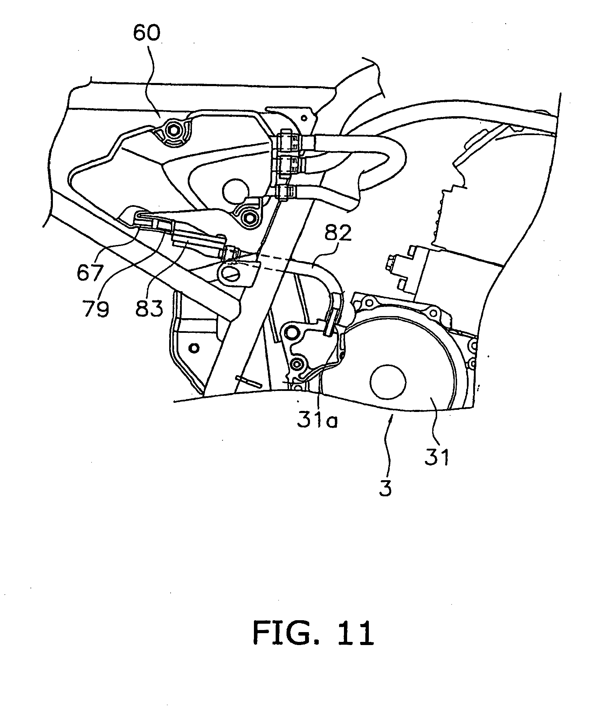

(b) In the foregoing embodiment, the open/close valve 81, which is an electromagnetic valve, is connected to the fifth hosepipe 79. However, a one-way valve 83 may be provided instead of the open/close valve 81 as illustrated in FIG.11. The one-way valve 83 is connected to the fourth connection port 67 of the catch tank 60 through the fifth hosepipe 79. Further, the one-way valve 83 is connected to the inflow port 31a of the crank case 31 through the sixth hosepipe 82. The one-way valve 83 is herein configured to allow flow of liquid from the catch tank 60 to the crank case 31 but prevent flow of liquid from the crank case 31 to the catch tank 60.

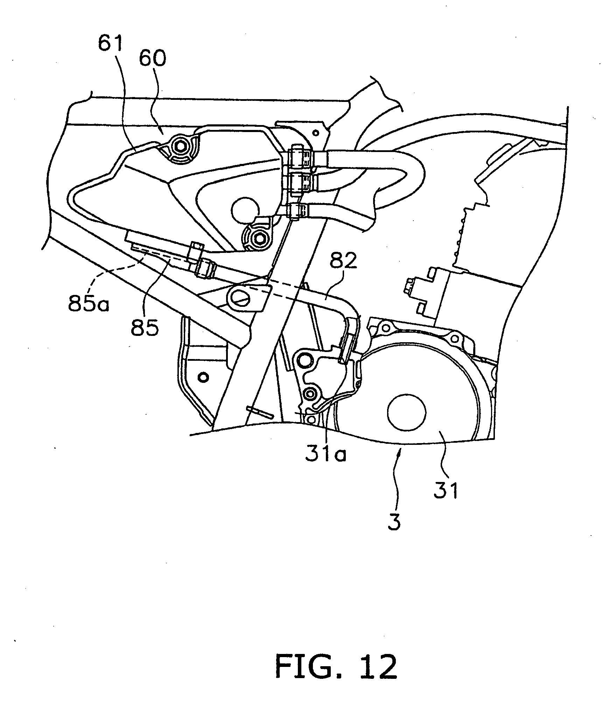

Alternatively, a one-way valve 85 may be integrally provided to the catch tank 60 as illustrated in FIG.12. The structure can reduce the number of hosepipes, in other words, the number of components. Further, the structure can improve layout of components in surrounding of the catch tank 60. In addition to the structure, it is desirable that the one-way valve 85 is integrally formed with the bottom surface of the tank body 61 and a valve body 85a of the one-way valve 85 composes the undermost surface of the inner part of the tank body 61. The structure can prevent liquid from being left within the catch tank 60 when the liquid, accumulated within the catch tank 60, is discharged.

Alternatively, a negative-pressure cock may be used instead of the open/close valve 81. The negative-pressure cock is herein configured to control its opening and closing with use of negative pressure in the crank case 31.

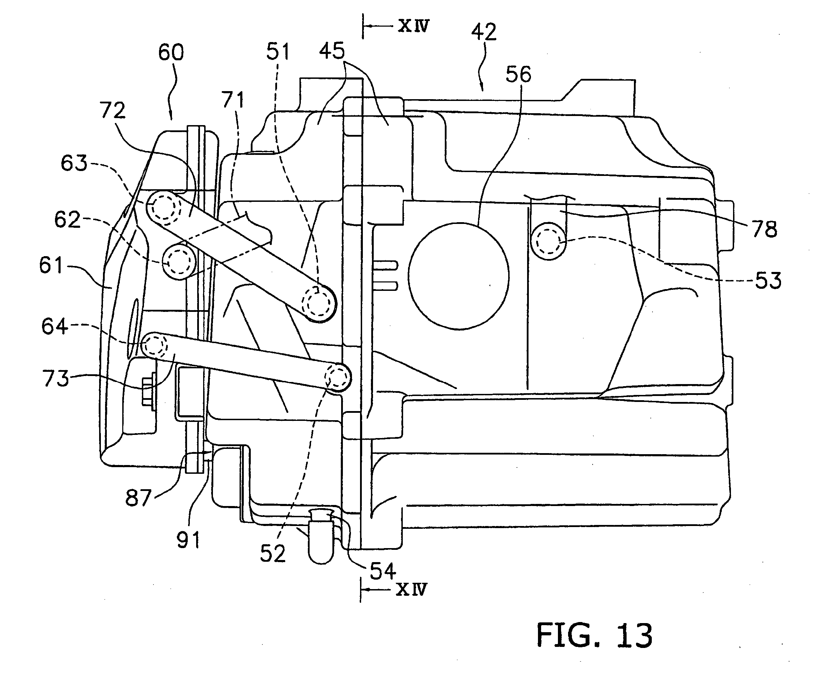

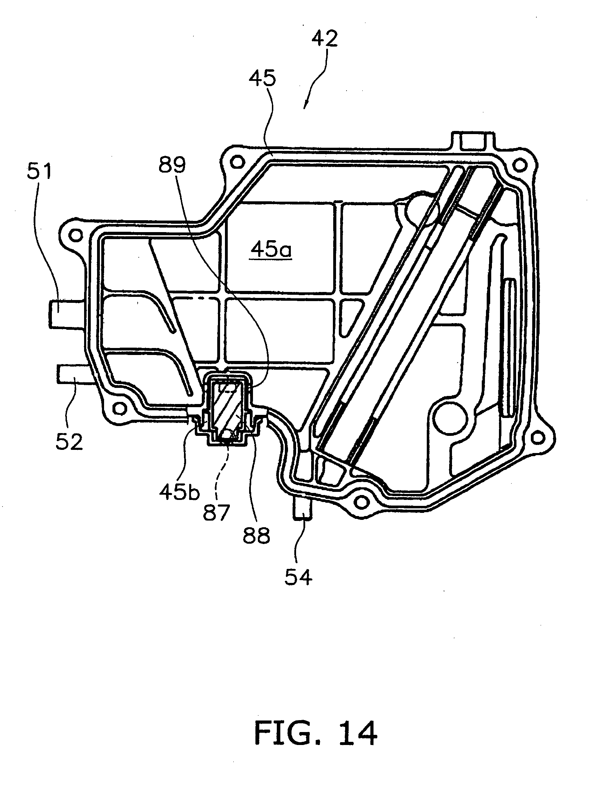

Alternatively, an aperture may be provided between the fourth hosepipe 78 and the inflow port 31a of the crank case 31. The structure can inhibit reverse flow of air from the crank case 31 to the air cleaner 42. Further, an aperture may be provided between the sixth hosepipe 82 and the inflow port 31a of the crank case 31. The structure can inhibit reverse flow of liquid from the crank case 31 to the catch tank 60.
(c) In the embodiment, liquid accumulated within the catch tank 60 is processed by transferring it from the catch tank 60 to the crank case 31. However, liquid accumulated within the catch tank 60 may be processed by transferring it from the catch tank 60 to the air cleaner 42. In this case, it is desirable to provide a moisture retainer member to the inside of the air cleaner 42. The moisture retainer member is herein configured to retain and evaporate liquid. FIGS.13 and 14 illustrate an example structure of the air cleaner 42 and the catch tank 60 when a moisture retainer 88 is disposed in the inside of the air cleaner 42. Specifically, FIG. 13 is a front view of the air cleaner 42 and the catch tank 60. FIG.14 is a cross-sectional view of the air cleaner 42, sectioned along line XIV-XIV in FIG.13. As illustrated in FIGS.13 and 14, an intake port 87 is provided to the casing 45 of the air cleaner 42. The intake port 87 is provided to a lateral surface of the casing 45, which is opposed to the catch tank 60. The intake port 87 is positioned lower than the second attachment port 52.

Further, as illustrated in FIG.14, the casing 45 is divided into a first chamber 45a and a second chamber 45b. The first chamber 45a occupies most of the inner space of the casing 45. The foregoing filter 46 is disposed in the first chamber 45a. The first chamber 45a communicates with the first attachment port 51, the second attachment port 52, the third attachment port 53, and the outlet 54. Volume of the second chamber 45b is smaller than that of the first chamber 45a. The second chamber 45b accommodates the moisture retainer member 88. The second chamber 45b is linked to the foregoing intake port 87. Further, the second chamber 45b is provided with a through hole 89. The through hole 89 is positioned higher than the intake port 87. The internal space of the second chamber 45b communicates with that of the first chamber 45a through the through hole 89. The moisture retainer member 88 is made of porous material such as a sponge. The moisture retainer member 88 absorbs and retains liquid. Further, the moisture retainer 88 gradually evaporates the retained liquid.

As illustrated in FIG.13, the catch tank 60 is provided with a fifth connection port 91. The fifth connection port 91 is provided to a lateral surface of the tank body 61, which is opposed to the air cleaner 42. The fifth connection port 91 is protruded from the lateral surface towards the air cleaner 42. The fifth connection port 91 is positioned lower than the third connection port 64. The fifth connection port 91 is directly connected to the intake port 87 of the air cleaner 42 without intervention of a hosepipe. Liquid within the catch tank 60 is transferred to the inside of the air cleaner 42 through the fifth connection port 91 and the intake port 87. Therefore, the fifth connection port 91 composes a second flow path for transferring liquid within the catch tank 60 to the air cleaner 42. It should be herein noted that the catch tank 60 is not provided with the fourth connection port 67 described in the foregoing embodiment.

Liquid, separated from blow-by gas within the catch tank 60, is transferred to the inside of the air cleaner 42 through the fifth connection port 91 and the intake port 87. The liquid is absorbed and retained by the moisture retainer member 88 within the air cleaner 42. Alcohol and gasoline, contained in the liquid retained by the moisture retainer member 88, are gradually changed into a gaseous state by heat of blow-by gas. Then, the gaseous alcohol and gasoline are transferred from the second chamber 45b to the first chamber 45a. Then, the gaseous alcohol and gasoline are supplied from the first chamber 45a to the engine 3 through the intake path 35. Therefore, liquid can be more efficiently processed than a structure that liquid is transferred from the catch tank 60 to the crank case 31.

It should be noted that the moisture retainer member 88 is not necessarily disposed in the inside of the air cleaner 42. Alternatively, the moisture retainer member 88 may be provided to the second flow path for transferring of liquid within the catch tank 60 to the air cleaner 42. Further, the fifth connection port 91 may be connected to the intake port 87 through a hosepipe.
(d) In the foregoing embodiment, the open/close valve 81 is opened during deactivation of the engine 3. However, the open/close valve 81 may be opened in other timing. For example, the open/close valve 81 may be opened during activation of the engine 3. Alternatively, the open/close valve 81 may be controlled in accordance with temperature of oil within the crank case 31. For example, the open/close valve 81 may be opened when temperature of oil within the crank case 31 is equal to or greater than a predetermined value, and may be closed when temperature of oil within the crank case is less than the predetermined value. It is desirable to set, as the predetermined value, temperature at which alcohol can be sufficiently evaporated.

(e) The catch tank 60 is not necessarily disposed lateral to the air cleaner 42. The catch tank 60 may be disposed in another position. Further, structure of the catch tank 60 is not limited to that in the foregoing embodiment, and various changes can be made for it.

(f) The second hosepipe 72 is not necessarily connected to the air cleaner 42. The second hosepipe 72 may be connected to another component disposed in a more downstream position in the intake path 35 than the filter 46 in the airflow direction.

(g) In the foregoing embodiment, blow-by gas is taken out of the cylinder head 33 of the cylinder portion 32 of the engine 3. However, blow-by gas may be transferred to the catch tank 60 from any of other portions of the engine 3. For example, blow-by gas may be transferred to the catch tank 60 from the crank case 31 of the engine 3. Alternatively, blow-by gas may be transferred to the catch tank 60 from any of other portions of the cylinder portion 32 excluding the cylinder head 33.

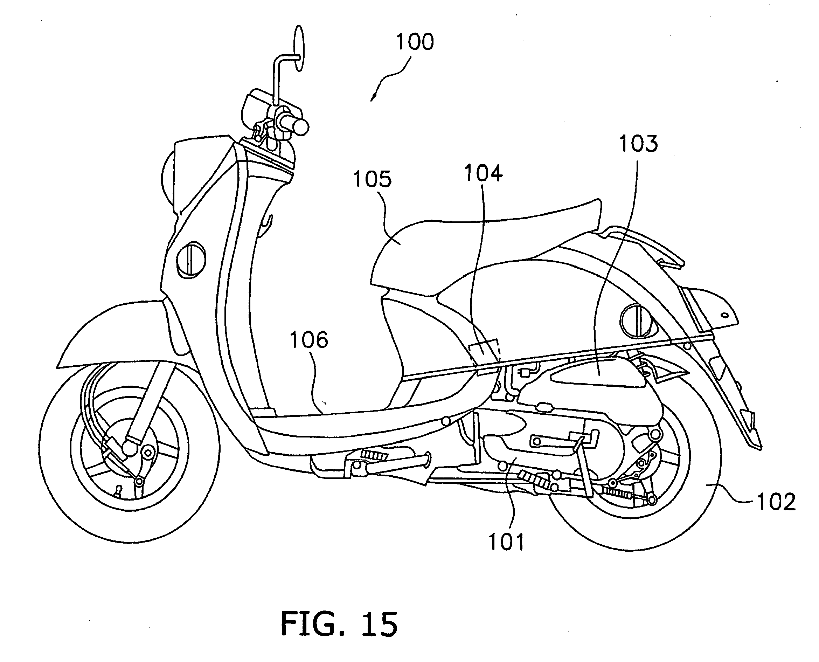

(h) In the foregoing embodiment, the present invention is applied to the sport-type motorcycle 1. However, the present invention may be applied to a scooter-type motorcycle, a moped motorcycle, or any other suitable saddle type vehicle such as a four-wheel buggy. For example, the present invention may be applied to a scooter-type motorcycle 100 as illustrated in FIG.15. In the motorcycle 100, a flat foot board 106 is provided in front of a seat 105. A rider puts his/her feet on the foot board 106. In addition, a power unit 101 is disposed to the rearward of the foot board 106 while being disposed beneath the seat 105. The power unit 101 includes an engine and CVT (Continuous Variable Transmission). Further, an air cleaner 103 is disposed over the power unit 101 while being disposed lateral to a rear wheel 102. Yet further, a catch tank 104 is disposed to the forward of the air cleaner 103.

### INDUSTRIAL APPLICABILITY

The present invention has an advantageous effect of inhibiting deviation of an air-fuel ratio of mixture gas to be supplied to an engine from a proper value and simultaneously inhibiting enlargement of the vehicle. Therefore, the present invention is useful for the saddle type vehicles.

### EXPLANATION OF THE REFERENCE NUMERALS

- 3: Engine
- 31: Crank Case
- 35: Intake path
- 42: Air cleaner
- 60: Catch tank (Separation device)
- 66: Airflow control valve (Airflow control portion)
- 78: Fourth hosepipe (Air path)
- 81: Open/Close valve
- 83,85: One-way valve
- 88: Moisture retainer member
- 91: Fifth connection port (second flow path)
- 92: Blow-by gas path
- 93: First flow path

## Claims

1. A saddle type vehicle, comprising:
an engine including a crank case;
an intake path connected to the engine;
an air cleaner provided to the intake path;
a blow-by gas path connecting the crank case and the air cleaner;
a separation device provided to the blow-by gas path;
an air path connecting the air cleaner and the crank case; and
an airflow control portion provided to the air path, the airflow control portion configured to allow airflow from the air cleaner to the crank case and prevent airflow from the crank case to the air cleaner.

2. The saddle type vehicle according to claim 1, further comprising a first flow path for returning liquid within the separation device to the crank case.

3. The saddle type vehicle according to claim 2, further comprising an open/close valve provided to the first flow path.

4. The saddle type vehicle according to claim 3, wherein the open/close valve is opened at the time of deactivation of the engine.

5. The saddle type vehicle according to claim 2, further comprising an one-way valve provided to the first flow path, the one-way valve configured to allow liquid flow from the separation device to the crank case and prevent liquid flow from the crank case to the separation device.

6. The saddle type vehicle according to claim 1, further comprising a second flow path for transferring liquid within the separation device to the air cleaner.

7. The saddle type vehicle according to claim 6, further comprising a moisture retainer member provided to the air cleaner or the second flow path, the moisture retainer member configured to retain and evaporate the liquid.

## Patentansprüche

1. Ein Fahrzeug vom rittlings zu fahrenden Typ, das folgende Merkmale aufweist:
einen Motor, der ein Kurbelgehäuse umfasst;
einen mit dem Motor verbundenen Ansaugweg;
ein dem Ansaugweg bereitgestelltes Luftfilter;
einen Leckgasweg, der das Kurbelgehäuse und das Luftfilter miteinander verbindet;
eine dem Leckgasweg bereitgestellte Trennvorrichtung;
einen Luftweg, der das Luftfilter und das Kurbelgehäuse miteinander verbindet; und
einen dem Luftweg bereitgestellten Luftstromsteuerungsabschnitt, wobei der Luftstromsteuerungsabschnitt dazu konfiguriert ist, einen Luftstrom von dem Luftfilter zu dem Kurbelgehäuse zu ermöglichen und einen Luftstrom von dem Kurbelgehäuse zu dem Luftfilter zu verhindern.

2. Das Fahrzeug vom rittlings zu fahrenden Typ gemäß Anspruch 1, das ferner einen ersten Strömungsweg zum Rückführen von Flüssigkeit in der Trennvorrichtung zu dem Kurbelgehäuse aufweist.

3. Das Fahrzeug vom rittlings zu fahrenden Typ gemäß Anspruch 2, das ferner ein Öffnen-/Schließen-Ventil aufweist, das dem ersten Strömungsweg bereitgestellt ist.

4. Das Fahrzeug vom rittlings zu fahrenden Typ gemäß Anspruch 3, bei dem das Öffnen-/Schließen-Ventil zum Zeitpunkt der Deaktivierung des Motors geöffnet wird.

5. Das Fahrzeug vom rittlings zu fahrenden Typ gemäß Anspruch 2, das ferner ein Einwegventil aufweist, das dem ersten Strömungsweg bereitgestellt ist, wobei das Einwegventil dazu konfiguriert ist, einen Flüssigkeitsstrom von der Trennvorrichtung zu dem Kurbelgehäuse zu ermöglichen und einen Flüssigkeitsstrom von dem Kurbelgehäuse zu der Trennvorrichtung zu verhindern.

6. Das Fahrzeug vom rittlings zu fahrenden Typ gemäß Anspruch 1, das ferner einen zweiten Strömungsweg zum Überführen von Flüssigkeit in der Trennvorrichtung an das Luftfilter aufweist.

7. Das Fahrzeug vom rittlings zu fahrenden Typ gemäß Anspruch 6, das ferner ein Feuchtigkeitsrückhaltebauglied aufweist, das dem Luftfilter oder dem zweiten Strömungsweg bereitgestellt ist, wobei das Feuchtigkeitsrückhaltebauglied dazu konfiguriert ist, die Flüssigkeit zurückzuhalten und abzudampfen.

## Revendications

1. Véhicule du type à selle, comprenant:
un moteur comportant un carter;
un trajet d'entrée connecté au moteur;
un purificateur d'air prévu pour le trajet d'entrée;
un trajet de gaz de soufflage reliant le carter et le purificateur d'air;
un dispositif de séparation prévu pour le trajet de gaz de soufflage;
un trajet d'air reliant le purificateur d'air et le carter; et
une partie de commande de flux d'air prévue pour le trajet d'air, la partie de commande de flux d'air étant configurée pour permettre une circulation d'air du purificateur d'air vers le carter et pour éviter une circulation d'air du carter vers l'épurateur d'air.

2. Véhicule du type à selle selon la revendication 1, comprenant par ailleurs un premier trajet de circulation pour retourner du liquide dans le dispositif de séparation vers le carter.

3. Véhicule du type à selle selon la revendication 2, comprenant par ailleurs une soupape d'ouverture/fermeture prévue pour le premier trajet de circulation.

4. Véhicule de type à selle selon la revendication 3, dans lequel la soupape d'ouverture/fermeture est ouverte au moment de la désactivation du moteur.

5. Véhicule du type à selle selon la revendication 2, comprenant par ailleurs une soupape à une voie prévue pour le premier trajet de circulation, la soupape à une voie étant configurée pour permettre que du liquide circule du dispositif de séparation vers le carter et pour éviter que du liquide ne circule du carter vers le dispositif de séparation.

6. Véhicule du type à selle selon la revendication 1, comprenant par ailleurs un deuxième trajet de circulation pour transférer du liquide dans le dispositif de séparation vers le purificateur d'air.

7. Véhicule du type à selle selon la revendication 6, comprenant par ailleurs un élément de retenue d'humidité prévu pour le purificateur d'air ou le deuxième trajet de circulation, l'élément de retenue d'humidité étant configuré pour retenir et évaporer le liquide.
